# EUROPEAN PATENT SPECIFICATION

(11) **EP 0 820 694 B1**
(45) Date of publication and mention of the grant of the patent: **06.02.2002**
(21) Application number: 97104451.6
(22) Date of filing: 15.03.1997
(51) Int. Cl.: A01K 1/00, A01K 1/02

(54) **Prefabrication system for open-air cattle stabling pens**
Fertigbausystem für im Freien aufgestellten Viehboxen
Système préfabriqué pour étables pour bétail en plein air

(30) Priority: 25.07.1996 IT MI961562
(43) Date of publication of application: 28.01.1998
(73) Proprietor: Brevetti Francesco CREMONESI S.p.A., 20060 Albignano d'Adda (Milano) (IT)
(72) Inventor: Cremonesi, Francesco, 20060 Albignano d'Adda, Milano (IT)
(74) Representative: Faraggiana, Vittorio, Dr. Ing.

(56) References cited:
- FR-A- 2 281 722
- GB-A- 1 509 337
- GB-A- 2 281 184

## Description

This invention concerns a particularly convenient and efficacious system for the stabling of cattle.

It is known that with the advent of open-air stabling the animals concerned were no longer confined to a fixed post, but were allowed to roam free in the areas allotted to them. These areas, known as grazing pastures, allow the animal to wander at will in an open-air environment together with the other occupants to be found in the same pastures.

Until a few years ago, two closed areas (cow sheds) were to be found in what was otherwise and open-air environment: i.e. a feeding area where the animal has access to the feeding troughs, which are normally equipped with automatic or free dosage devices, and a sleeping area.

The latter area was originally conceived by adopting the so-called fixed litter system in the form of a covered shelter wherein each head of cattle had six square metres at its disposal. This area was covered with straw which, as it became progressively soiled, was covered with other straw from time to time which, in its turn, was completely changed and cleaned every three or four months.

The animals were kept in this area in small groups where each head of cattle enjoyed more than enough space than was strictly necessary to its needs.

Successively, so as to reduce the space allotted to each animal - and therefore reduce the cost of maintaining these covered shelters - as well as to permit mechanical cleaning and a reduction in the consumption of straw, spaces were introduced known as very low surface area pens which were equipped with barriers which separated one pen from another and which were situated along the sides of an access corridor which was also equipped with a sewage outlet which could be cleaned mechanically.

Since it has been discovered that an animal's health improves rather than deteriorates if it is kept constantly in the open air, as well as for economical reasons, it has now become the practice to substitute covered cow sheds, even if they are used solely for feeding and sleeping purposes, with open sheds covered by simple roofing and similarly designed for sleeping and feeding necessities.

Therefore, nowadays the cattle's designated sleeping area is generally constructed in the grazing areas in the open air, albeit with the appropriate sheltering against bad weather (wind and rain) in the form of roofing and wind-breaks.

Thus, a series of concrete pens are built for sleeping purposes - especially during the night - each covered by a roof and each destined to accommodate a single animal.

Since building these structures in concrete is rather time-consuming and burdensome, in that their construction requires different stages of work involving the use of various pieces of equipment that have to be acquired according to the structure and when and where desired (caissons, etc.), prefabrication using modular components is now preferred.

With the italian patent for industrial invention No. 1.228.403 the same inventor suggested a new prefabrication method for the construction of open-air cow sheds with cattle pens which were constituted of a series of modules which could be fitted together, so as to provide the number of sleeping areas desired on a ready basis.

This system foresaw the form of the sleeping area as a type of trough which could be then filled with straw and sawdust. Later, the technique was improved upon with the substitution of the straw and sawdust litter with stuffed bedding material which, though satisfactorily meeting the needs of efficient cleaning of the sites, resulted in the problem of dampness in the areas occupied by the rear end of the animal.

GB-A-2 281 184 discloses a livestock stall apparatus comprising a platform supported by a pair of ground supporting elements extending in a direction substantially perpendicular to the longitudinal extent of the stalls.

So as to overcome this problem it was decided (this being the subject-matter of this discovery) to introduce a milking platform which is raised above the ground so as to allow the passage of liquid excrement and biological secretions produced by the animal onto the bedding material, and also allowing for the cleaning of the bedding material itself, into a gutter below.

The invention consists of an idea wherein the system is conceived by the prefabrication of two basic components, each having a length allowing for three or more places, and to position between the two, above ground level, a plate which serves as a pen and having holes which are positioned in correspondence with those of the lower third component thereby allowing liquids which are released onto the bedding material to pass beneath it and through the holes into a gutter below thus keeping the bedding material dry.

A modular system made up of three basic units is disclosed and, more precisely:
- of a head component, which also serves as a head-rest for the animal and means which support the roofing structure and the stable-rails;
- of a base component to be fixed at a distance with respect to the first which is equal to the length of the site;
- of many flat reinforced concrete plates to be inserted with their two heads in suitable housing units sunk into the two head components of the base, so that they remain raised above the ground and having in the lower third component, corresponding to the position of the rear end of the animal, a series of holes for the drainage of the liquid excrement which are thus collected in a drainage channel placed beneath said perforated area.

A roofing structure is also foreseen as well as concrete panels which serve as windbreaks and ballast, these components already being known from italian patent No. 1.228.403 as cited.

The invention will be understood better with a description of an example of its realization, given solely by way of example and which does not limit the invention, illustrated by the four tables of drawing attached and which show:
fig.1 - the layout of a module and part of a second module for the construction of an open-air cow shed with cattle pens built according to this invention;
fig. 2 - a section of the same according to A.A. of figure 1 in correspondence with the point of insertion of a stable-rail;
fig. 3 - a section of the same according to B.B. of figure 1 corresponding to the point of attachment of the posts for the roofing structure;
fig. 4 - a section in correspondence with the point of attachment of the posts for the roofing structure of a variant of the system in which the cattle pens are placed in two opposite parallel rows.

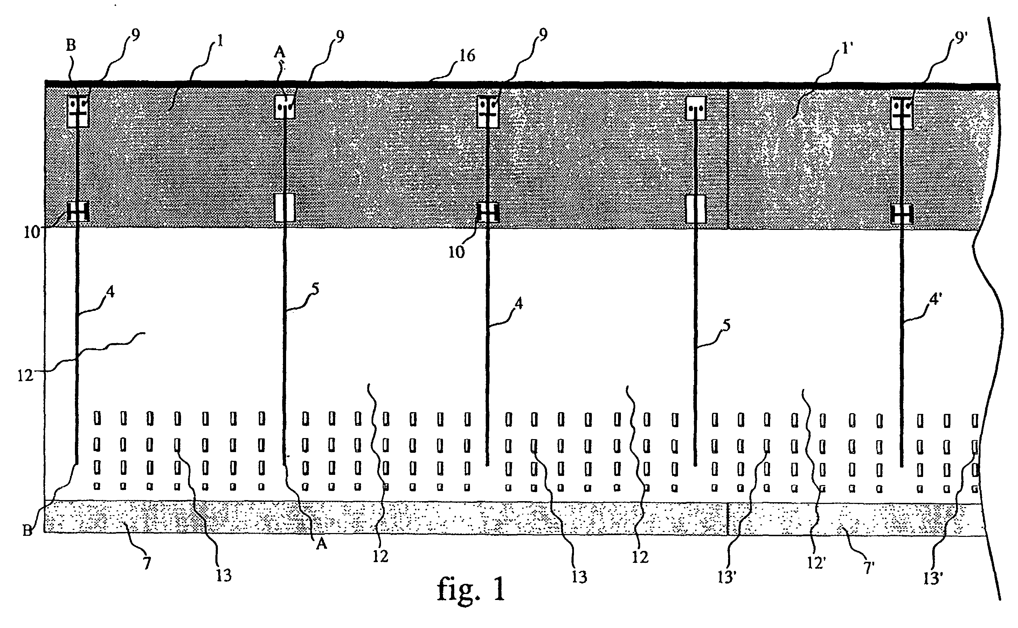

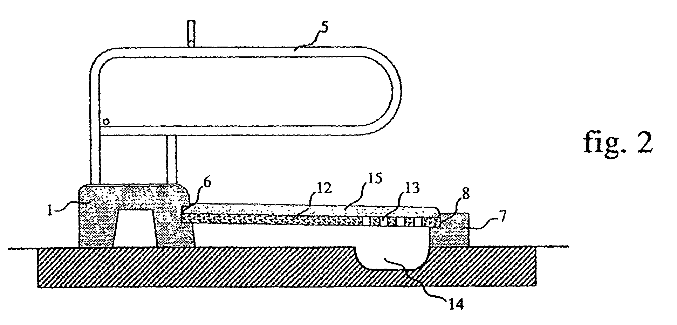

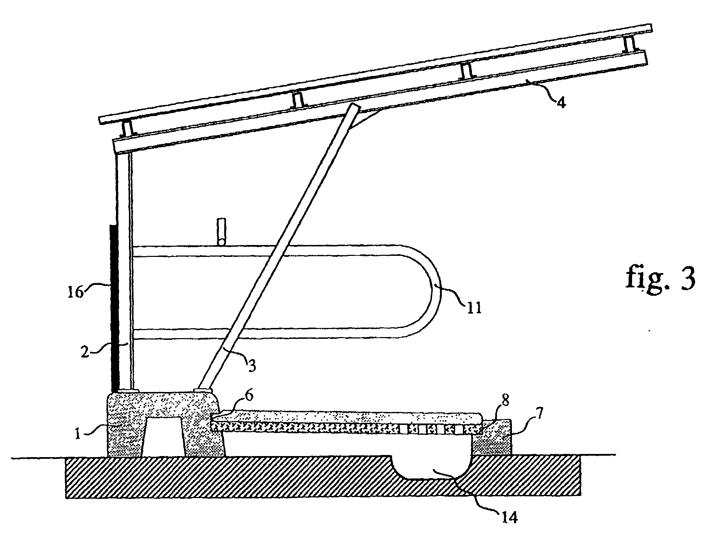

With reference to figures 1, 2 and 3, the various components are described which make up the system which is formed of:
- a first modular head component which is formed of a single piece prefabricated reinforced concrete unit 1 and 1' which in the figure is comprised of three pens and has the form of an upturned U, but may take on any other kind of shape as long as it sufficiently robust and heavy to be able to support the roofing and endure the corresponding static and dynamic stress, of a length which corresponds to three or more pens.
   This component is of such dimensions and weight as to enable it, as well as serving as a head rest for the animal, to act a means of support for the roofing structure formed by the vertical support structures 2 and 3 of the roofing 4 as well as the stable-rail 5.
   On the front vertical face of this particular, at a certain height with respect to the support base on the ground, a longitudinal slot is cut out 6.
   Since elements 1 and 1' make up the part which is destined to carry the supports 2 and 3 of the support structure for the roofing, tie-rods 9 and 10 are sunk into them and which exit from the block with threaded stumps or other suitable means so as to receive and block the anchorage plates situated at the base of the supports 2 and 3 of the vertical structure of the roofing itself.
   One of the stable-rails is also situated transversely to supports 2 and 3.
   Intercalates to the roofing supports are again anchored to the head component in such a way as to divide the various pens of the other series of stable-rails 5.
- a second component which is also formed in its turn of a single piece prefabricated reinforced concrete unit is constituted of a sort of tang 7 and 7' of the same length of the head element 1 and 1' and carries, in a position opposite to the slot 6, but slightly lower with respect to the ground, so as to create a slight slope, a step 8.
- a third component constituted of a reinforced concrete plate 12 with such dimensions both in length and width as to form a pen is inserted with one end in slot 6 of component 1 and 1' and the other end is leaned against step 8 on component 7 and 7'.

In its third lower component this plate has a series of holes 13 which are situated above a drainage channel 14 situated in the ground beneath.
- The padded rubber bedding material 15 of a known type is placed on plate 12 and is fixed in the head component by pinching it into the slot 6, thus completing the equipment.
- Means of a known type fixed to one of the roofing supports are destined to anchoring the wind-breaker panels 16 also constituting as ballast for the base component 1 and 1'.

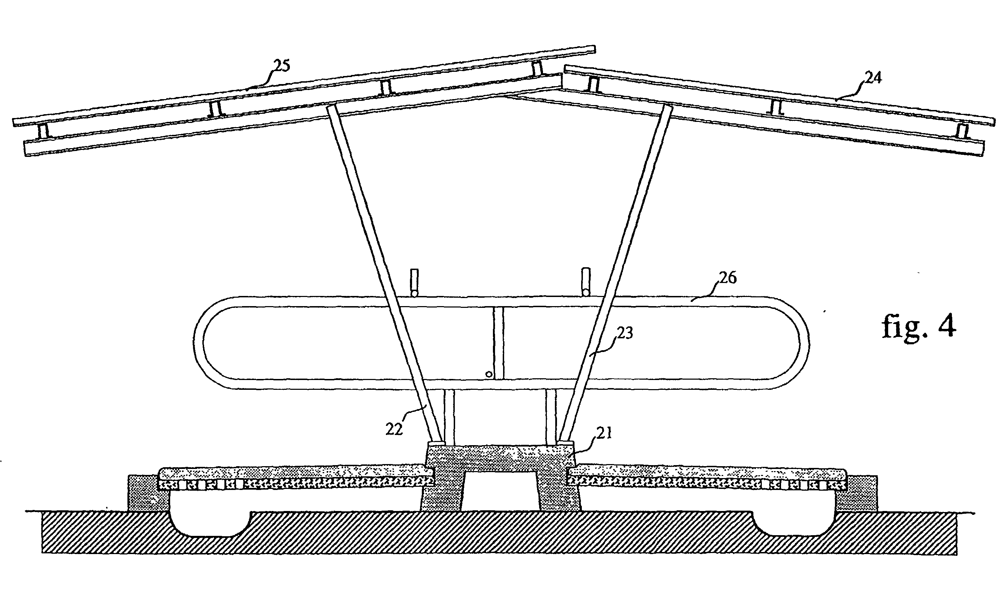

Figure 4 is an example of a variant of the system of prefabricated cattle pens carrying two series of rows of pens opposite each other.

This arrangement foresees head components 21 constituted of a modular unit with a double width with respect to that of the single row type disclosed above and it serves as a head rest for the two animals positioned opposite each other as well as, as in the previous case, a support for the posts 22 and 23 of the double roofing structure 24 and 25 of a known type and also as a support at the distances fixed of the stable-rails 26 which are also double.

Finally, it must also be stressed that this form of realization does not limit the scope of the invention, but rather it must be understood that numerous modifications, additions, variations and substitutions may be carried out without going outside the scope of protection of the invention as defined in the claims.

## Claims

1. A prefabrication system for open-air cattle stabling pens made of a series of prefabricated modules, each module comprising three basic parts consisting of a head element (1, 1'), a base element (7, 7') spaced from said head element (1, 1') and extending substantially parallel to it and a plate (12, 12') bridging the head (1, 1') and base (7, 7') elements, so as to define a space between the plate (12, 12') itself and the ground, whereby the plate (12, 12') is supported on the head (1, 1') and base (7, 7') elements with a slight inclination sloping down towards the base element (7, 7'), **characterized in that** the plate is provided with holes (13, 13') in its lower portion close to the base element (7, 7'), thereby allowing liquids which are released above the plate (12, 12') to pass through the holes (13, 13') to the space comprised between the plate (12, 12') and the ground.

2. A prefabrication system for open-air cattle stabling pens according to claim 1, **characterized in that** the head element (1, 1') is provided, on its side faced to the base element (7, 7'), with a slot (6) for the introduction and support of a first edge of the plate (12, 12') and the base element (7, 7') is provided, on its upper side, with a step (8) for the support of a second edge of the plate (12, 12') lower than said first edge.

3. A prefabrication system for open-air cattle stabling pens according to claim 1, **characterized in that** the head element (1, 1') carries anchor means (9, 9', 10, 10') for supporting structures (2, 3) of a pen roofing (4) and for stable-rails (5).

4. A prefabrication system for open-air cattle stabling pens according to claim 2, **characterized in that** the plate (12, 12') is made of a flat reinforced concrete plate and is covered by a padded rubber bedding material (15) fixed to the head element (1, 1') by pinching it into the slot (6) between the plate (12, 12') and the head element (1, 1').

5. A prefabrication system for open-air cattle stabling pens according to claim 1, **characterized by** comprising a series of prefabricated, double face-to-face modules, each double face-to-face module being made of a head element (21), of a pair of base elements (7, 7') spaced from said head element (21) at opposite sides thereof and extending substantially parallel to it and of a pair of plates (12, 12'), each of them bridging the head element (21) and a respective base element (7, 7'), so as to define a space between each plate (12, 12') and the ground, each plate (12, 12') being supported on the head (21) and base (7, 7') elements with a slight inclination sloping down towards the base element (7, 7') and being provided with holes (13, 13') in its lower portion close to the base element (7, 7'), thereby allowing liquids which are released above the plate (12, 12') to pass through the holes (13, 13') to the space comprised between the plate (12, 12') and the ground.

6. A prefabrication system for open-air cattle stabling pens according to claim 5, **characterized in that** the head element (21) is provided, on its sides faced to the respective base elements (7, 7'), with a slot (6) for the introduction and support of a first edge of one of the plates (12, 12') and each base element (7, 7') is provided, on its upper side, with a step (8) for the support of a second edge of said one of the plates (12, 12') lower than said first edge.

7. A prefabrication system for open-air cattle stabling pens according to claim 5, **characterized in that** the head element (21) carries anchor means for supporting structures (22, 23) of a double pen roofing (24, 25) and for double stable-rails (26).

8. A prefabrication system for open-air cattle stabling pens according to claim 1, **characterized in that** the base element (7, 7') is placed at a distance from the head element (1, 1'), which is equal to the length of a place for one animal.

9. A prefabrication system for open-air cattle stabling pens according to claim 1, **characterized in that** each head element (1, 1'), base element (7, 7') and plate (12, 12') have a length corresponding to at least three places.

## Patentansprüche

1. Fertigbausystem für im Freien aufgestellte Viehboxen, die aus einer Reihe von vorgefertigten Modulen bestehen, wobei jedes Modul drei Grundteile umfaßt, die aus einem Kopfelement (1, 1'), einem Fußelement (7, 7'), das von dem Kopfelement (1, 1') beabstandet ist und sich im wesentlichen parallel zu diesem erstreckt, und einer Platte (12, 12'), die das Kopf- (1, 1') und das Fuß- (7, 7') Element überbrückt, um einen Raum zwischen der Platte (12, 12') selbst und dem Boden festzulegen, bestehen, wobei die Platte (12, 12') auf dem Kopf- (1, 1') und dem Fuß- (7, 7') Element mit einer leichten Neigung, die in Richtung des Fußelements (7, 7') abfällt, abgestützt wird, **dadurch gekennzeichnet, daß** die Platte mit Löchern (13, 13') in ihrem unteren Teil nahe dem Fußelement (7, 7') versehen ist, wodurch ermöglicht wird, daß Flüssigkeiten, die über der Platte (12, 12') freigegeben werden, durch die Löcher (13, 13') in den Raum, der zwischen der Platte (12, 12') und dem Boden liegt, strömen.

2. Fertigbausystem für im Freien aufgestellte Viehboxen nach Anspruch 1, **dadurch gekennzeichnet, daß** das Kopfelement (1, 1') auf seiner Seite, die dem Fußelement (7, 7') zugewandt ist, mit einem Schlitz (6) für die Einführung und Abstützung einer ersten Kante der Platte (12, 12') versehen ist, und das Fußelement (7, 7') auf seiner oberen Seite mit einer Stufe (8) für die Abstützung einer zweiten Kante der Platte (12, 12'), die niedriger ist als die erste Kante, versehen ist.

3. Fertigbausystem für im Freien aufgestellte Viehboxen nach Anspruch 1, **dadurch gekennzeichnet, daß** das Kopfelement (1, 1') Verankerungseinrichtungen (9, 9', 10, 10') zum Abstützen von Strukturen (2, 3) einer Boxenbedachung (4) und für Stallquerbalken (5) trägt.

4. Fertigbausystem für im Freien aufgestellte Viehboxen nach Anspruch 2, **dadurch gekennzeichnet, daß** die Platte (12, 12') aus einer ebenen Stahlbetonplatte besteht und von einem gepolsterten Gummischichtungsmaterial (15) bedeckt ist, das an dem Kopfelement (1, 1') durch Quetschen desselben in den Schlitz (6) zwischen der Platte (12, 12') und dem Kopfelement (1, 1') befestigt ist.

5. Fertigbausystem für im Freien aufgestellte Viehboxen nach Anspruch 1, **dadurch gekennzeichnet, daß** es eine Reihe von vorgefertigten, gegenüberliegenden Doppelmodulen umfaßt, wobei jedes gegenüberliegende Doppelmodul aus einem Kopfelement (21), einem Paar von Fußelementen (7, 7'), die von dem Kopfelement (21) auf entgegengesetzten Seiten desselben beabstandet sind und sich im wesentlichen parallel zu diesem erstrecken, und einem Paar von Platten (12, 12'), von denen jede das Kopfelement (21) und ein jeweiliges Fußelement (7, 7') überbrückt, um einen Raum zwischen jeder Platte (12, 12') und dem Boden festzulegen, besteht, wobei jede Platte (12, 12') auf dem Kopf- (21) und dem Fuß- (7, 7') Element mit einer leichten Neigung, die in Richtung des Fußelements (7, 7') abfällt, abgestützt wird und mit Löchern (13, 13') in ihrem unteren Teil nahe dem Fußelement (7, 7') versehen ist, wodurch ermöglicht wird, daß Flüssigkeiten, die über der Platte (12, 12') freigegeben werden, durch die Löcher (13, 13') in den Raum, der zwischen der Platte (12, 12') und dem Boden liegt, strömen.

6. Fertigbausystem für im Freien aufgestellte Viehboxen nach Anspruch 5, **dadurch gekennzeichnet, daß** das Kopfelement (21) auf seinen Seiten, die den jeweiligen Fußelementen (7, 7') zugewandt sind, mit einem Schlitz (6) für die Einführung und Abstützung einer ersten Kante von einer der Platten (12, 12') versehen ist, und jedes Fußelement (7, 7') auf seiner oberen Seite mit einer Stufe (8) für die Abstützung einer zweiten Kante der einen der Platten (12, 12'), die niedriger ist als die erste Kante, versehen ist.

7. Fertigbausystem für im Freien aufgestellte Viehboxen nach Anspruch 5, **dadurch gekennzeichnet, daß** das Kopfelement (21) Verankerungseinrichtungen zum Abstützen von Strukturen (22, 23) einer Doppelboxenbedachung (24, 25) und für Doppelstallquerbalken (26) trägt.

8. Fertigbausystem für im Freien aufgestellte Viehboxen nach Anspruch 1, **dadurch gekennzeichnet, daß** das Fußelement (7, 7') in einem Abstand vom Kopfelement (1, 1') angeordnet ist, welcher gleich der Länge eines Platzes für ein Tier ist.

9. Fertigbausystem für im Freien aufgestellte Viehboxen nach Anspruch 1, **dadurch gekennzeichnet, daß** jedes Kopfelement (1, 1'), jedes Fußelement (7, 7') und jede Platte (12, 12') eine Länge entsprechend mindestens drei Plätzen aufweisen.

## Revendications

1. Un système de préfabrication pour étables pour bétail en plein air constitué d'une série de modules préfabriqués, chaque module comprenant trois parties de base constituées d'un élément de tête (1, 1'), d'un élément de base (7, 7') écarté dudit élément de tête (1, 1') et s'étendant essentiellement parallèlement à lui et d'une plaque (12, 12') reliant les éléments de tête (1, 1') et de base (7, 7') de manière à définir un espace entre la plaque (12, 12') elle-même et le sol, la plaque (12, 12') étant portée par les éléments de tête (1, 1') et de base (7, 7') avec une légère inclination descendant vers l'élément de base (7, 7'),
**caractérisé en ce que** la plaque est pourvue d'orifices (13, 13') dans sa portion inférieure, proche de l'élément de base (7, 7'), permettant ainsi aux liquides qui sont répandus au-dessus de la plaque (12, 12') de passer à travers les orifices (13, 13') vers l'espace compris entre la plaque (12, 12') et le sol.

2. Un système de préfabrication pour étables pour bétail en plein air selon la revendication 1,
**caractérisé en ce que** l'élément de tête (1, 1') est pourvu, sur son côté en regard de l'élément de base (7, 7'), d'une fente (6) pour l'introduction et l'appui d'un premier bord de la plaque (12, 12') et l'élément de base (7, 7') est pourvu, sur son côté supérieur, d'un gradin (8) pour l'appui d'un second bord de la plaque (12, 12') plus bas que ledit premier bord.

3. Un système de préfabrication pour étables pour bétail en plein air selon la revendication 1,
**caractérisé en ce que** l'élément de tête (1, 1') porte des moyens d'ancrage (9, 9', 10, 10') pour porter des structures (2, 3) d'une toiture (4) d'étable et pour des rambardes (5) d'étable.

4. Un système de préfabrication pour étables pour bétail en plein air selon la revendication 2,
**caractérisé en ce que** la plaque (12, 12') est constituée d'une plaque en béton renforcé plane et est recouverte d'un matériau (15) de scellement en caoutchouc strié fixé à l'élément de tête (1, 1') en le pinçant à l'intérieur de la fente (6) entre la plaque (12, 12') et l'élément de tête (1, 1').

5. Un système de préfabrication pour étables pour bétail en plein air selon la revendication 1,
**caractérisé en ce que**, en comprenant une série de modules préfabriqués double en face à face, chaque module double en face à face étant fait d'un élément de tête (21), d'une paire d'éléments de base (7, 7') écartés dudit élément de tête (21) de part et d'autre de celui-ci et s'étendant essentiellement parallèlement à lui et d'une paire de plaques (12, 12'), chacune desquelles reliant l'élément de tête (21) et un élément de base respectif (7, 7') de manière à définir un espace entre chaque plaque (12, 12') et le sol, chaque plaque (12, 12') étant portée par les éléments de tête (21) et de base (7, 7') avec une légère inclination descendant vers l'élément de base (7, 7') et étant pourvue d'orifices (13, 13') dans sa partie inférieure proche de l'élément de base (7, 7'), permettant ainsi aux liquides qui sont répandus au-dessus de la plaque (12, 12') de traverser les orifices (13, 13') vers l'espace compris entre la plaque (12, 12') et le sol.

6. Un système de préfabrication pour étables pour bétail en plein air selon la revendication 5,
**caractérisé en ce que** l'élément de tête (21) est pourvu, sur ses côtés en regard des éléments de base respectifs (7, 7'), d'une fente 6 pour l'introduction et l'appui d'un premier bord de l'une des plaques (12, 12') et chaque élément de base (7, 7') est pourvu, sur sa face supérieure, d'un gradin (8) pour l'appui du second bord de l'une desdites plaques (12, 12') plus bas que ledit premier bord.

7. Un système de préfabrication pour étables pour bétail en plein air selon la revendication 5,
**caractérisé en ce que** l'élément de tête (21) porte des moyens d'ancrage pour porter des structures (22, 23) d'une double toiture d'étable (24, 25) et pour des rambardes (26) d'étable doubles.

8. Un système de préfabrication pour étables pour bétail en plein air selon la revendication 1,
**caractérisé en ce que** l'élément de base (7, 7') est placé à une distance de l'élément de tête (1, 1') qui est égale à la longueur d'une place pour un animal.

9. Un système de préfabrication pour étables pour bétail en plein air selon la revendication 1,
**caractérisé en ce que** chaque élément de tête (1, 1'), chaque élément de base (7, 7') et chaque plaque (12, 12') a une longueur correspondant à au moins trois places.
